# EUROPEAN PATENT APPLICATION

(11) **EP 4 614 258 A1**
(43) Date of publication of application: **10.09.2025**
(21) Application number: 24161384.3
(22) Date of filing: 05.03.2024
(51) Int. Cl.: G05B 19/418, G06F 8/33, G06F 8/38

(54) **METHOD OF AND DEVICE FOR OPERATING AN INDUSTRIAL PLANT**

(71) Applicant: Siemens Aktiengesellschaft, 80333 München (DE)
(72) Inventor: Lopez Padilla, Diego Gerardo, 90459 Nürnberg (DE)
(74) Representative: Siemens Patent Attorneys

(57) **Abstract**

A method of operating an industrial plant (2) comprises: obtaining (S1) an entry (82) of a topic of interest in natural language from an operator of the industrial plant (2); generating (S2) a prompt for a pre-trained and fine-tuned generative large language model (61) based on the obtained entry (82); inputting (S3) the generated prompt to the generative large language model (6) so as to obtain, from the generative large language model (61), a specification of a graphical user interface (9) related to the entered topic of interest; rendering (S4) the graphical user interface (9) based on the obtained specification and based on current data obtained from the industrial plant (2); and operating (S5) the industrial plant based on an interaction of the operator with the rendered graphical user interface.

Machine-guided operation of the industrial plant is enabled.

## Description

The present invention relates to the field of industrial plants, and in particular to a method of operating an industrial plant, a corresponding device and a corresponding system.

As of today, an industrial plant, such as a production factory and the like, may comprise a large number of programmable devices, such as process controllers, PLCs, industrial PCs, sensors, actors, and the like, that control the workflow of the production process in the industrial plant. The complexity of these systems, tools, applications and the like in the production process continues to increase over time.

In order for an operator to obtain access to the process and its configuration in the industrial plant, conventionally, an engineering system like TIA Portal, a SCADA system, or source code like https://www.copia.io, is used. These solutions offer the possibility to visualize technical aspects of the production process within the industrial plant in a human machine interface (HMI) display and allow the operator to operate the industrial plant, modify aspects of the production process and the like, by interacting with the human machine interface display.

However, use of the existing solutions to generate a graphical user interface that is adapted to solve a specific task requires the operator to study a large amount of manuals and to have engineering skills. As such, the process of solving problems with the production process, optimizing parameters of the production process and the like is cumbersome and is often not carried out in an optimal manner, resulting in unnecessary downtimes, less-than-optimum production output, and the like.

Thus, it is one object of the present invention to improve the process of operating an industrial plant.

In order to solve the aforementioned object, under a first aspect, a method of operating an industrial plant comprises: a) obtaining an entry of a topic of interest in natural language from an operator of the industrial plant; b) generating a prompt for a pre-trained and fine-tuned generative large language model based on the obtained entry, c) inputting the generated prompt to the generative large language model so as to obtain, from the generative large language model, a specification of a graphical user interface related to the entered topic of interest; d) rendering the graphical user interface based on the obtained specification and based on current data obtained from the industrial plant; and e) operating the industrial plant based on an interaction of the operator with the rendered graphical user interface.

Accordingly, it is possible to provide the operator with a graphical user interface that is tailored to the technical task that the user is trying to solve, thus allowing for effective control of the desired technical process in the industrial plant, while at the same time relieving the operator from the burden of having to study manuals and manually engineer the required graphical user interface. Thus, advantageously, operability of the industrial plant is improved, and a machine-guided operation of the industrial plant is enabled.

The topic of interest, in particular, is a technical topic of interest that is related to the industrial plant, to a state of the industrial plant, or to a technical process running in the industrial plant.

The entry of the topic of interest may be obtained by rendering a preliminary graphical user interface that comprises an entry field into which the topic of interest can be entered in natural language by the operator. However, the entry of the topic of interest may also be obtained through voice recognition or the like.

In particular, a generative large language model may comprise a deep neural network employing, for example, a transformer architecture, and having a large number of neurons, such as one billion (10⁹) neurons or more, preferable 7 billion neurons or more, more preferably 13 billions of neurons or more, and most preferably 70 billion neurons or more. In particular, the generative large language model may be configured to receive a sequence of tokens, such as words, syllables or lexemes, as input and to output one token as output that is deemed to be the "most probable" next token. In particular, the generative large language model may be operated in a generative or autoregressive manner, that is: an entry being a sequence of tokens may be provided to the generative large language model as input, the first most probable next token output by the generative large language model may be appended to the entry to obtain a new entry to be provided to the generative large language model as input in the next iteration, and by repeating this sequence of iterations, the generative large language model may generate a meaningful most probable response to the entry that comprises several sentences or even paragraphs.

In particular, the generative large language model is pre-trained so as to understand natural language and have the capability to give meaningful responses about an arbitrary subject. Such pre-training is possible by using a text database that is the result from crawling a portion, preferably a substantial portion, of the Internet as training data. Herein, any given text comprising N >= 2 words may provide up to N-1 training data sets, each training dataset comprising the first n<N words from the text as input training data and the n+1-th word of the text as output training data, for n=1 .. N-1. As such, no labelling of the training data used for the pre-training is required. However, the pre-training of the generative large language model may, optionally, also comprise steps of supervised training using labelled training data generated by humans so as to further improve the capability of the large language model to provide meaningful responses to human users.

Examples for a pre-trained generative large language model include OpenAI's ChatGPT 3 and 4, Google Al's PaLM, DeepMind's Chinchilla, and Meta's LLaMa and LLaMA 2 models. The latter pre-trained generative large language models from Meta are available for download from the Internet, while the former pre-trained models can be accessed and licensed on the Internet, including the possibility to perform further custom fine-tuning.

In particular, the generative large language model is fine-tuned for the industrial task to which it is going to be applied according to the proposed solution. That is, fine-tuning may comprise unsupervised or supervised further training of the generative large language model, using training data that relates to the industrial plant and/or to graphical user interfaces for interacting with the industrial plant. Specific embodiments of the fine-tuning that have been found to contribute to usefulness and technical effectiveness of the generated graphical user interfaces are disclosed at a later point in the present specification.

The pre-trained and fine-tuned generative large language model may also be simply referred to as LLM for brevity hereinbelow.

The prompt for the LLM may comprise at least a textual representation of the entered topic of interested. Optionally, the prompt for the LLM may comprise additional contextual information, such as properties of the operator or state information about the industrial plant, to enable the LLM to better generate the desired response. In particular, the prompt is generated automatically, without requiring further user input apart from the entry of the optic of interest. Therein, prompting techniques such as zero-shot prompting, few-shot prompting, chain-of-thought prompting, one-shot prompting, multi-shot prompting, generated knowledge prompting, prompt chaining, automatic reasoning, automatic prompt engineering, directional stimulus prompting, graph prompting, and the like.

The specification of a graphical user interface is obtained from the LLM as a sequence of words, or tokens, and may be in any format that can be automatically post-processed so as to automatically render the graphical user interface. The specification may be in YAML, JSON, HTML, Siemens WinCC Unified RDF, or any suitable other format.

Rendering the graphical user interface may comprise displaying the graphical user interface on a graphical user interface device, such as a display device or a human machine interface display.

Herein, in particular, the rendering is based on the specification obtained from the LLM and is based on current data obtained from the industrial plant.

In one variant, the specification obtained from the LLM may specify the structure of the graphical user interface to be rendered and may specify the content to be rendered inside the structure. The specification of the content to be rendered may comprise a specification of which data to obtain from which component of the industrial plant. Rendering the graphical user interface may thus comprise obtaining (requesting, measuring, receiving etc.) current data from the industrial plant according to the content specification comprised in the specification obtained from the LLM; may comprise rendering the structure specified by the structure specification comprised in the specification obtained from the LLM, and may comprise rendering the obtained current data as content inside the structure.

In another variant, current data obtained (requested, measured, received etc.) from the industrial plant may be provided to the LLM in advance. For example, the current data may be obtained from the industrial plant in step b) and may be provided to the LLM as part of the prompt generated in step b) and may be inputted into the LLM in step c). Alternatively, the current data may be obtained from the industrial plant in regular intervals, and the LLM may be fine-tuned so as to learn the obtained current data in regular intervals. In either case, also according to the present variant, the specification obtained from the LLM may specify the structure of the graphical user interface to be rendered and may specify the content to be rendered inside the structure. However, the specification of the content to be rendered may comprise the actual current data to be rendered inside the structure, that has been supplied by the LLM. Accordingly, rendering the graphical interface need not comprise obtaining current data from the industrial plant, but comprises rendering the structure specified by the specification, and comprises rendering the current data included in the specification as content inside the structure. It is noted that also in this variant, the current data supplied by the LLM as part of the specification may be understood as "current data obtained from the industrial plant", as it is based on current data that was obtained from the industrial plant and was supplied to the LLM either as part of the prompt or as part of a recent fine-tuning step.

Thus, the rendered graphical user interface may comprise at least one information element representing the current data obtained from the industrial plant, such as information about a state or parameter of a device or process inside the industrial plant. Furthermore, the rendered graphical user interface may comprise at least one operational element, such as a button, a radio control, a checkbox, an entry field, or the like, that can be operated so as to change or otherwise control a state or parameter of a device or process inside the industrial plant.

Thus, in particular, the operator that interacts with the rendered graphical user interface, may interact with the operational element of the graphical user interface, guided by the current data obtained from the industrial plant displayed in the information element of the graphical user interface, so as to advantageously achieve a machine-guided operation of the industrial plant.

According to an embodiment, the method further comprises further performing the fine-tuning of the generative large language model.

That is, according to the first aspect, the proposed method may start out with a pre-trained and already fine-tuned model. However, according to the present embodiment, the proposed method may also start out with a pre-trained, but not yet fine-tuned model, and may comprise the fine-tuning of the model, as it was described hereinabove and will further be described hereinbelow.

According to a further embodiment, the generative large language model is and/or is being fine-tuned with static data representing knowledge about the industrial plant.

The term "is and/or is being" can be understood as "is" at least in a case when the method starts out with the already fine-tuned model, and can also be understood as "is being" in a case where the method comprises the fine-tuning step.

Static data representing knowledge about the industrial plant may comprise data that has been collected by an operator or a manufacturer of the industrial plant about the industrial plant and/or about similar or older versions of the industrial plant, and includes, but is not limited to, instruction manuals, service manuals, log files, protocols, audit reports, technical specifications, and the like.

Through fine-tuning the LLM with knowledge about the industrial plant, the LLM may acquire or improve its capability to understand the plant-specific jargon used by the operator that enters a topic of interest, and may acquire knowledge about the inner workings of the industrial plant.

According to a further embodiment, the proposed method further comprises obtaining graphical user interface specifications of graphical user interfaces that exist in the industrial plant and fine-tuning the generative large language model with the obtained user interface specifications of the existing graphical user interfaces.

Controllers, PLCs, and industrial PLCs and existing display devices and human machine interface devices of the plant may offer a set of pre-existing graphical user interfaces that can be accessed with a web browser or a special custom software. The method may comprise accessing these pre-existing graphical user interfaces and obtaining their specifications, such as their HTML, JSON, YAML, or RDF code, and using said existing specifications as further training data for the fine-tuning of the LLM.

Thus, the LLM may advantageously acquire or improve its capability to generate the specification of the graphical user interface in a machine-readable syntax that can be automatically rendered on a display device or a human machine interface device.

According to a further embodiment, the generative large language model is and/or is being fine-tuned with labelled data comprising labelling instructions and corresponding graphical user interface specifications.

The labelling instructions may comprise a written request to create a specification of a graphical user interface for a topic of interest in relation to the industrial plant, and may furthermore comprise instructions on the desired properties of such a graphical user interface. The further instructions may be sufficient for a human engineer to devise a suitable graphical user interface specification. Correspondingly, the corresponding graphical user interface specifications may be obtained by a human engineer who is given the labelling instructions as a task. However, it is also conceivable to automate the process of generating graphical user interface specifications from the labelling instructions. Said automation may be carried out by a neural network or by a conventional computing device, depending on the level of specificness of the labelling instructions.

By performing such supervised training of the LLM with a sufficient amount of labelled training data comprising the labelling instructions and their corresponding graphical user interface specifications (desired output for the supervised training), the LLM is advantageously fine-tuned to reliably acquire the specific ability to create meaningful graphical user interface specifications based on an operator entry. Herein, the LLM may even acquire the ability to create meaningful graphical user interface specification based on an operator entry that is less specific than the labelling instructions used during the supervised training.

According to a further embodiment, the generative large language model is further fine-tuned, in regular intervals, with dynamic data from the industrial plant representing a current state of the industrial plant.

The dynamic data may comprise state information, sensor values, current protocol/log entries, current configuration data and the like.

Through such fine-tuning, the LLM may be made aware of the current state of the industrial plant and may thus be able to tailor the generated graphical user interface specification, and any reasoned response to a user question that may be included therein, to the current state of the industrial plant and/or to display the current state of the industrial plant in the graphical user interface.

According to a further embodiment, step b) comprises obtaining dynamic data from the industrial plant representing a current state of the industrial plant from the industrial plant and including said dynamic data into the prompt.

Instead of periodically re-training the LLM, the dynamic data may be supplied to the LLM together with the prompt. That is, a preprocessor may process the entered topic in interest, may obtain dynamic data relating to the entered topic of interest from the industrial plant, and may include the obtained dynamic data into the prompt.

In this way, advantageously, the LLM may be made aware of the current state of the industrial plan without having to perform periodical re-training.

According to a further embodiment, step a) comprises authenticating the operator, and step b) comprises including a number of properties of the authenticated operator into the prompt.

The LLM may infer, from the number of properties, information such as a level of authorization of the operator, a level of experience of the authenticated operator, a scope of responsibilities of the authenticated operator, and the like. Using such information included in the prompt, the LLM may advantageously better tailor the generated user interface specification to the task that the operator having specified the entry of the topic of interest is trying to solve.

According to a further embodiment, the proposed method may comprise f) refining the rendered graphical user-interface in response to a further entry made by the operator in response to the rendering of the graphical user-interface.

That is, the operator may advantageously be enabled to perform few-shot prompting and supply the LLM with further information or instructions to refine the rendered graphical user interface if the initially rendered graphical user interface does not comply to his topic interest and/or if, after having reviewed the rendered graphical user interface, the operator decides that further or different information, interaction possibilities and the like are desired.

According to a further embodiment, step e) comprises operating the industrial plant based on a further entry made by the operator in response to the rendering of the graphical user-interface.

That is, the operator may not only operate the industrial plant by interacting with graphical user interface elements such as buttons and checkboxes, but the operator may advantageously also operate the industrial element by conducting an interactive dialogue with the LLM, instructing the LLM to cause technical tasks to be performed in the industrial plant, and the like.

To this end, the LLM may output, as part of its output data in response to the further entry, instructions that are filtered out by an automated post-processor and are used by the automated post-processor to perform the necessary tasks, such as changing configuration of devices of the industrial plant, setting setpoint values of actors in the industrial plant, starting or stopping processes in the industrial plant, and the like.

Any embodiment of the first aspect may be combined with any embodiment of the first aspect to obtain another embodiment of the first aspect.

According to a second aspect, there is proposed a computer program product comprising a program code for executing the method of the first aspect or any one of its embodiments when run on at least one computer that is communicatively connected with the industrial plant.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, there is proposed a device for operating an industrial plant, the device comprising: a) a first unit configured to obtain an entry of a topic of interest in natural language from an operator of the industrial plant; b) a second unit configured to generate a prompt for a pre-trained and fine-tuned generative large language model based on the obtained entry; c) a third unit configured to input the generated prompt to the generative large language model so as to obtain, from the generative large language model, a specification of a graphical user interface related to the entered topic of interest; d) a fourth unit configured to render the graphical user interface based on the obtained specification and based on current data obtained from the industrial plant; and e) a fifth unit configured to operate the industrial plant based on an interaction of the operator with the rendered graphical user interface.

The respective unit may be implemented in hardware and/or in software. If said unit is implemented in hardware, it may be embodied as a device, e.g. as a computer or as a processor or as a part of a system, e.g. a computer system. If said unit is implemented in software, it may be embodied as a computer program product, as a function, as a routine, as a program code or as an executable object.

According to a fourth aspect, there is provided a system comprising the device of the third aspect and the generative large language model.

Herein, the generative large language model may be implemented as a unit of the device of the third aspect, for example, as a program executing on the device and accessing weights for the neural network of the generative large language model that are stored on the device, or may be implemented as a unit of a different device comprised by the system and communicatively connected to the device of the third aspect.

According to an embodiment, the system further comprises a user interface device on which the user interface is rendered by the fourth unit.

According to a further embodiment, the system further comprises the industrial plant.

In particular, the device of the third aspect and/or the user interface device may each be communicatively connected to the industrial plant so as to allow the device of the third aspect to access dynamic data relating to the industrial plant, and so as to allow the operator to operate the industrial plant by interacting with the rendered graphical user interface, respectively.

It is noted that the embodiments, features and advantages described with reference to the method of the first aspect apply mutatis mutandis to the computer program product of the second aspect, the device of the third aspect and the system of the first aspect of the present invention.

It is noted that independent of the grammatical term usage, for example of terms such as "operator", "user" and the like, individuals with male, female or other gender identities are included within the term.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 illustrates an industrial system according to a first exemplary embodiment;
Fig. 2 visualizes steps of a method according to the first exemplary embodiment;
Fig. 3 shows an exemplary screen for obtaining an operator entry;
Fig. 4 shows an exemplary rendered graphical user interface;
Fig. 5 visualizes steps of a method according to a second exemplary embodiment;
Fig. 6 visualizes steps of a method according to a third exemplary embodiment; and
Fig. 7 visualizes training of the generative large language model according to a fourth exemplary embodiment.

In the Figures, like reference numerals designate like or functionally equivalent elements, unless otherwise indicated.

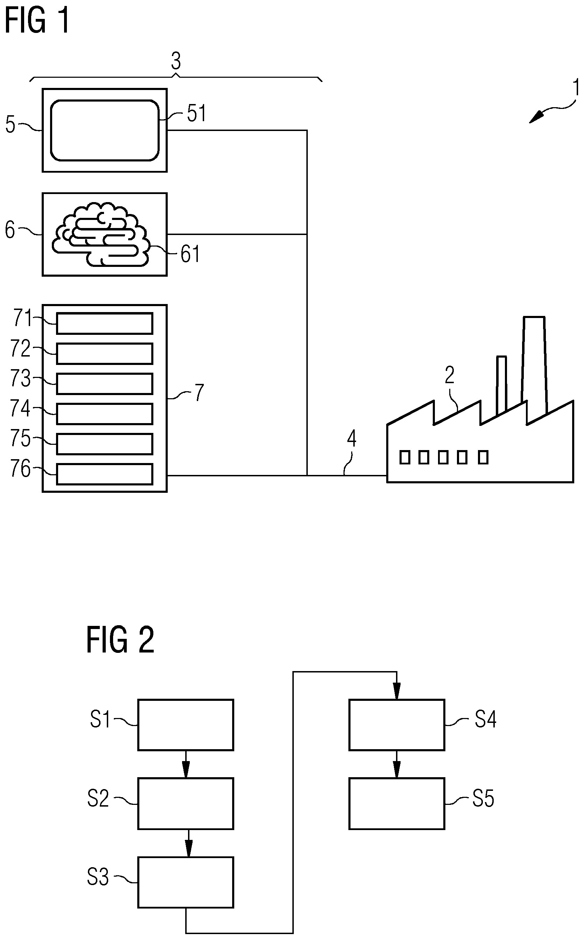

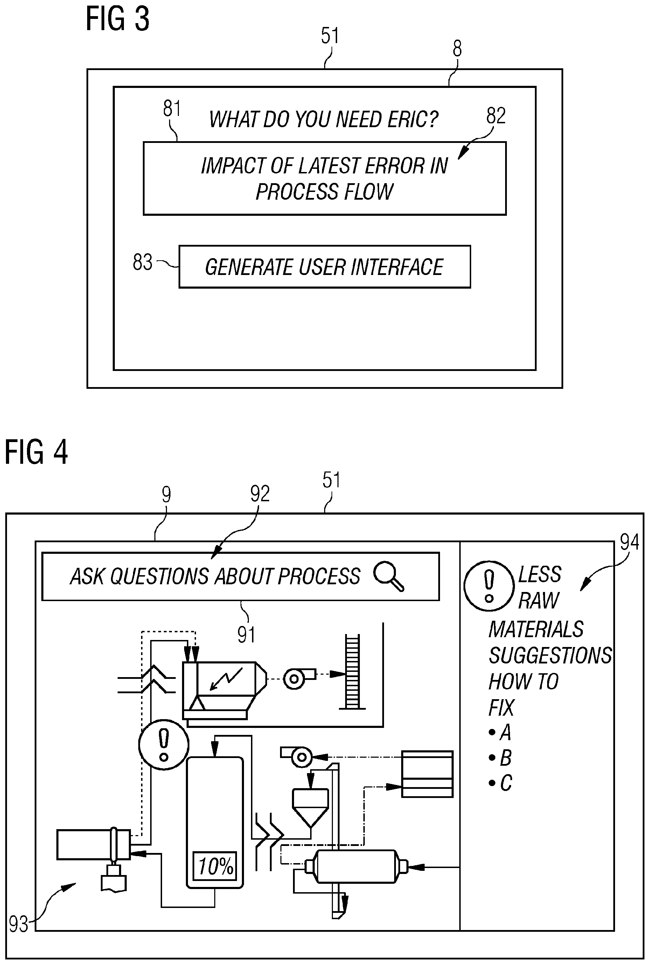

Fig. 1 illustrates an industrial system 1 according to a first exemplary embodiment. The industrial system 1 comprises an industrial plant 2 and an operation system 3 that is used to operate the industrial plant 2. The operation system 3 and the industrial plant 2 are communicatively connected by a network 4. The operation system 3 comprises three computing devices, namely: a user interface device 5, an artificial intelligence device 6, and a general-purpose computing device 7. Each of the three computing devices 5-7 may comprise non-shown standard means for computation, such as a non-shown CPU, RAM, HDD, SDD, interface components like keyboard, display, network interface, and the like. The three computing devices 5-7 are communicatively interconnected by the network 4. The user interface device 5 comprises a display 51 on which various screens to be described hereinbelow can be rendered. The artificial intelligence device 6 embodies a generative large language model (LLM) 61. The LLM 61 is pre-trained to understand natural language and is further fine-tuned so as to participate in the below-described method. In particular, the LLM 61 is thus configured, through pre-training and fine-tuning, to generate a specification of a graphical user interface (9, Fig. 4, to be described later) for operating the industrial plant 2. The general-purpose computing device 7 (hereinbelow simply "computing device 7") is an example of a device for operating the industrial plant 2 and comprises functional units 71 to 75 to be described hereinbelow, which enable the computing device 7 to perform the proposed method of operating an industrial plant 2.

Fig. 2 visualizes steps of a method according to the first exemplary embodiment. Reference will now be made to Fig. 1 and Fig. 2.

In step S1, the first unit 71 of the computing device 7 obtains an entry of a topic of interest in natural language from an operator of the industrial plant 2. To this end, the first unit 71 may render a screen (8 in Fig. 3) containing a prompt and a text input field (81 in Fig. 3) on the display 51 of the user interface device 5.

Fig. 3 shows such an exemplary screen 8 for obtaining an operator entry rendered on the display 51. Reference is now made to Fig. 1-3.

On the exemplary screen 8, the first unit 71 displays a prompt such as "What do you need, Eric?" and provides a text input field 81 into which the operator may enter, as entry 82, a topic of interested. Additionally, the rendered screen 8 comprises a button 83 that is labelled "Generate user interface", for example.

It is noted that in the present example, the first unit 71 may know the name "Eric" of the operator by virtue of having authenticated the operator prior to rendering screen 8. However, this configuration constitutes an optional further development of the first exemplary embodiment, and in the most basic form of the exemplary embodiment, if the operator name is unknown, a non-personalized prompt like "What do you need?", or "Enter topic of interest:" may be used instead.

The operator then makes an entry 82 in the text input field 81. In the present example, the entry 82 reads "Impact of latest error in process flow", but this is merely an example. After that, the user confirms the entry 82 by pressing the "Generate user interface" button 83, thereby causing the method to proceed to step S2.

In step S2, the second unit 72 of the computing device 7 generates a prompt for the pre-trained and fine-tuned LLM 61 based on the obtained operator entry 82.

The generated prompt comprises at least the text that was entered by the operator (entry 82).

The generated prompt may additionally comprise a string the constitutes a command to the LLM 61, such as "Generate a specification for a graphical user interface that helps the operator to answer the following question".

Furthermore, in the preferred further development, in which the operator has been authenticated, the generated prompt may also comprise attributes of the operator, such as his role, language, location, expertise etc., which may be known to the computing device 7 following authentication, or which may be acquired from a non-shown authentication server, such as an LDAP server or the like. Such attributes may allow the LLM 61 to better tailor the user interface specification to be generated to the specific needs and capabilities of the operator.

The prompt may also comprise additional strings that guide the LLM's 61 behavior, such as "do not ramble", "be helpful and concise", "avoid damage to the industrial plant", and the like.

Still further, the second unit 72 may tokenize the text comprised in the prompt into a sequence of word-, syllable- or lexeme-based tokens that are suitable for being input into the LLM 61.

In step S3, the third unit 73 of the computing device 7 inputs the generated and tokenized prompt to the LLM 61 so as to obtain, from the LLM 61, through generative or autoregressive operation of the LLM 61, a specification of a graphical user interface (9 in Fig. 4) related to the entered topic of interest. The generated specification may be in any machine-processable format, such as YAML, JSON, HTML, WinCC Unified RDF, and the like. Merely as an example, the generated specification may look like the following YAML example (only an excerpt of which is shown):

```
      # Version: 2.0
      Screens:
         Screen1:
            ScreenNumber: 1
            BackColor: Green
            Height: 1024
            Width: 1080
            Items:
               MyTextBox:
                  ObjectType: TextBox
                  BackColor: WhiteSmoke
                  Text: 'Less Raw Materials. Suggestions ... [...]'
                  Lett: 125
                  Top: 155
                  Height: 25
                  Width: 100
               MyButton:
                  ObjectType: Button
                  ForeColor: Black
                  Text: 'Refine UI'
                  Top: 198
                  Left: 12520
                  Width: 100
                  Height: 25
       [ ... ]
```

Then, in step S4, the fourth unit 74 of the computing device 7 renders a graphical interface (9 in Fig. 4) that is based on the obtained specification and is also based on current data obtained from the industrial plant 2, which is displayed inside the rendered graphical interface (9 in Fig. 4).

Fig. 4 shows an exemplary graphical user interface 9 rendered on the display 51 of the user interface device 5 by the fourth unit 74 of the computing device 7. Reference is made to Fig. 1 to 4. The graphical user interface 91 comprises UI elements 93 representative of specific portions of the industrial plant 2 according to the topic of interest (entry 82) that was entered by the operator into the text input field 81. As shown conceptually, the UI elements 93 may comprise graphical representations of specific components of the industrial plant 2. Further, although not visualized in detail, the UI elements 93 may comprise information elements that display current data obtained from the industrial plant 2, such as measured values from sensors, current log file entries, and the like. Further, the UI elements 93 may comprise operational elements, such as buttons, checkboxes, selection fields and the like, that can be manipulated by the operator in subsequent step S5. Further, in particular, the UI elements 93 may comprise a reasoning 94 that has been provided by the LLM 61. The reasoning 94 is another example of an informational element. In the present example, the reasoning 94 comprises an answer to the posed question "Impact of latest error in process flow" (topic of interest of entry 82), i.e. "less raw materials", and further also provides suggestions on how to fix said impact as reasoned by the LLM 61 based on its knowledge about the industrial plant 2.

In the subsequent step S5, the fifth unit 75 of the computing device 7 enables the operator to interact with the operational elements among the UI elements 93. The fifth unit 75 then operates the industrial plant 2 in response to any such user interaction with the UI elements 93 of the graphical user interface 9. For example, the operator, after having appreciated, and guided by, the information displayed in the information elements among the UI elements 93, may issue commands to specific device components of the industrial plant 2, update setting values and configuration data of specific device components of the industrial plant 2, may trigger events within the industrial plant 2, and the like. The fifth unit 75 communicates with a communication partner device inside the industrial plant 2 so as to perform the technical actions that were instructed by these operator interactions with the graphical user interface 9.

In addition, according to a preferred further development, the rendered graphical user interface 9 may also comprise, as shown in Fig. 4, a text input field 91 into which the operator can enter a further entry 92.

The further entry 92 may comprise instructions to the LLM 61 to refine the rendered graphical user interface 9. Examples of such further entries include "enlarge the area around the pump", "add visualization component for pump valve", or the like. In response to a user confirming the further entry 92, such as by pressing a non-shown button, or by pressing an ENTER key, the fifth unit 75 may append the further entry 92 to the original entry 82 and execution may branch back to step S2. That is, a further prompt may be generated based on the combined original and further entries 82, 92, the further prompt may be inputted to the LLM 61, a refined graphical user interface specification may be obtained from the LLM 61 by operating it in a generative manner, and the refined graphical user interface 9 may be rendered on the display 51 of the display device 5.

Alternatively, or in addition, the further entry 92 may comprise instructions for operating the industrial plant 2 in natural language. Similar to the above-described procedure, the fifth unit 75 appends the further entry 92 to the original entry 82 and feeds a prompt based on the combined entries 92, 82 to the LLM 61. However, in this case, the LLM 61 may output, in addition to and/or instead of the graphical user interface specification 9, machine instructions for operating the industrial plant 2. The third unit 73, upon obtaining such instructions from the LLM 61, may communicate with a communication partner device inside the industrial plant 2 so as to perform the technical actions that were instructed by the instructions obtained from the LLM 61.

It is noted that in the present first exemplary embodiment, as well as in its further developments, although not visualized in the flow chart of Fig. 2, a further non-shown unit of the computing device 7 may perform a further step of fine-tuning the LLM 61 in regular intervals with dynamic data that represents a current state of the industrial plant 2 and is obtained, by the computing device 7, in regular intervals from the industrial plant 2. This enables the LLM 61 to supply the relevant measured values from sensors and the like, from log files and the like, and the reasoning 94 based on current data obtained from the industrial plant 2. However, alternative configurations to enable the graphical user interface 9 to be based on current data obtained from the industrial plant 2 are envisioned and described hereinbelow.

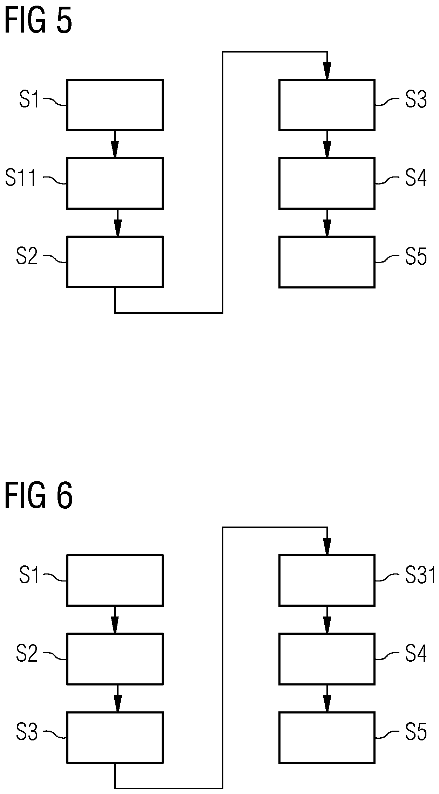

That is, Fig. 5 visualizes steps of a method according to a second exemplary embodiment. The method of the second exemplary embodiment is similar to the method of the first exemplary embodiment, but differs from the method of the first exemplary embodiment by comprising additional preprocessing step S11.

In preprocessing step S11, the first unit of 71 the computing device 7 matches the entry 82 obtained from the operator with a list of keywords, wherein each keyword corresponds to a specific technical device inside the industrial plant 2. For each matched keyword, the first unit 71 communicates with the respective corresponding device to obtain current data (such as measured sensor data, log files, configuration files and the like) from said device, and appends the data received from the device to the entry 82, optionally using a prefix such as "Device <device id> currently supplies the following data: " or the like. In this way, the prompt generated by the second unit 72 in step S2 is based on the original operator entry 82 as well as on current data obtained from the industrial plant 2. In this way, the LLM 61 will be made aware of the current data obtained from the industrial plant 2 when the prompt is input in step S3, and the graphical user interface 9 specification obtained from the LLM 61 in step S3 can be based also on said current data obtained from the industrial plant 2.

According to the second exemplary embodiment, it is advantageously not necessary to periodically re-train the LLM 61 with current data obtained from the industrial plant 2; rather, such current data is only obtained and supplied to the LLM 61 as part of prompting the LLM 61 as and when needed.

Fig. 6 visualizes steps of a method according to a third exemplary embodiment. The method of the third exemplary embodiment is similar to the method of the first exemplary embodiment, but differs from the method of the first exemplary embodiment by comprising an additional postprocessing step S32.

According to the third exemplary embodiment, the LLM 61 is not provided with dynamic knowledge about current data obtained from the industrial plant 2. Rather, when the LLM 61 generates a graphical user interface specification in which the LLM 61 deems it adamant to display current data obtained from the industrial plant 2, it inserts a corresponding data obtaining instruction into the graphical user interface specification that it outputs. Correspondingly, in additional postprocessing step S32, the third unit 73 of the computing device 7 scans the obtained specification of the graphical interface 9 for data obtaining instructions. Upon finding a data obtaining instruction, the third unit 73 communicates with a communication partner device in the industrial plant 2 so as to obtain current data from the industrial plant. Herein, which communication partner device to communicate with and which data to request may depend on the data obtaining instruction found in the specification of the graphical interface 9 obtained from the LLM 61. The third unit 73 then replaces the data obtaining instruction with the actually obtained current data in the specification.

In this way, the graphical user interface 9 rendered in step S4 may display current data obtained from the industrial plant 2 without having to make the LLM 61 aware of such current data.

According to the third exemplary embodiment, it is advantageously neither necessary to periodically re-train, nor is it necessary to prompt, the LLM 61 with current data obtained from the industrial plant 2. The third exemplary embodiment is particularly advantageous when it is desired (or when the LLM 61 deems it to be adamant) to display current data that frequently changes, such as sensor readings and the like.

So far, use of the pre-trained and fine-tuned LLM 61 has been discussed. The first to third exemplary embodiments advantageously enable a machine-guided operation of the industrial plant 2 that does not require the operator to perform time-consuming engineering tasks or have in-depth skills when a tailored graphical user interface 9 is required.

The remainder of the description will focus on how a pre-trained LLM 61 can be fine-tuned to behave as described hereinabove.

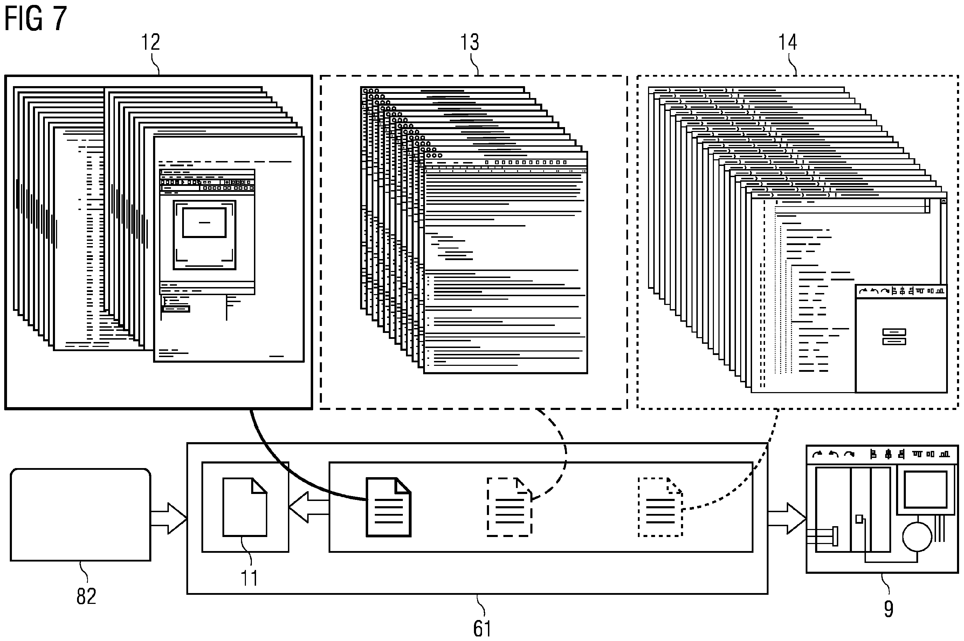

Fig. 7 visualizes training of the generative large language model according to a fourth exemplary embodiment. Reference is made to Fig. 7 and Fig. 1.

The method of the fourth exemplary embodiment comprises the steps of any one of the first to third exemplary embodiments, and comprises an additional (not visualized in the Figures) step of fine-tuning a pre-trained LLM so as to achieve the pre-trained and fine-tuned LLM 61. The step of fine-tuning the LLM 61 is at least carried out once before any of steps S1 to S5 (Fig. 2). The step of fine-tuning the LLM 61 may also be repeated in periodic intervals or on an as-need-basis to refine and update the fine-tuning of the LLM 61.

That is. Fig. 7 visualizes the LLM 61 that is configured to receive a prompt that is based on an operator entry 82 and to output, in response, a specification of a graphical interface 9, and visualizes data that is used to fine-tune the LLM 61.

That is, the initial fine-tuning step starts out with an LLM 61 that comprises pre-trained model parameters 11 (weight factors for its deep neural network, and assorted parameters such as temperature values, gain function parameters and the like) that were determined during a pre-training step in which the LLM 61 has been trained, using data resulting from a crawl of a portion of the Internet, to predict a next work based on a sequence of previous words. Such a pre-trained LLM 61 may be obtained ready-made from Meta Inc., OpenAl or other companies.

According to a first preferred variant of the fourth exemplary embodiment, the fine-tuning step comprises fine-tuning the LLM 61 with static data 12 representing knowledge about the industrial plant 2. Such static data 12 may comprise technical manuals, technical specifications, descriptions of existing graphical user interfaces that are provided by various device components of the industrial plant 2, and the like. Suppliers and operators of industrial plants 2 have often acquired multiple decades' worth of such static data 12. The fine-tuning may be carried out in a manner similar to the pre-training, i.e., the LLM 61 may be further trained to predict a next word or token based on a sequence of previous tokens using text excerpts from the static data 12. Through such unsupervised fine-tuning, the LLM 61 may advantageously acquire the capability of understanding speaking the specifical technical jargon that applies to a given industrial plant 2, and may acquire knowledge about the inner workings of the technical plant 2.

According to a second preferred variant of the fourth exemplary embodiment, the fine-tuning step comprises fine-tuning the LLM 61 with labelled data comprising labelling instructions 13 and corresponding graphical user interface specifications 14, wherein each graphical user interface specifications 14 corresponds to a respective labelling instruction 13.

A respective labelling instruction 13 may comprise a specific portion that comprises a text-based description of a task submitted by a user, similar to the topics of interest that are expected to be entered later-on as entries 82 (Fig. 2) by the operator.

A respective labelling instruction 13 may additionally comprise a general part that describes what and how to do, i.e. the required syntax and the required way in which the task is to be fulfilled. An example of such a general part of the labelling instruction 13 is recited below.
You are given a text-based description of a task, submitted by a user. This task description may be in the form of an explicit instruction (e.g. "Draw the machine status and their performance metrics."). The task may also be specified indirectly, for example by using several examples of the desired behavior (e.g. given a sequence of machine state followed by their sentiment, followed by one machine error without a sentiment, you can assume the task is to predict the GUI components of the latest critical error of the machine), or by generating the GUI components of a desired output (e.g. given "Given all connected components in the production," you can assume the task is to draw the GUI with an intuitive layout displaying real-time data on machine statuses, production rates, and quality metrics).
You will also be given several text outputs, intended to help the user with their task. Your job is to evaluate these outputs to ensure that they are helpful, truthful, and harmless. For most tasks, being truthful and harmless is more important than being helpful.
The output of the task shall be in YAML format following this syntax:
   Screens:
      Screen[Name]:
         [List of Properties]
      Items:
         Button[Name]:
            [List of Properties]
         [OtherComponent] :
            [List of Properties]
   By helpful, we mean that the output should follow the user's intention, and help the user solve their task. Some examples of helpful behavior:
      - Writing GUI components/screens as per specification
      - Generating GUI screens they meant to ask, even if they mis-asked it.
      - Being sensitive to internationality (e.g. "PLC" shouldn't mean Public Limited Company but Programmable Logic Controller, and "the president" might not necessarily mean the same person in different countries or companies).
      - If an instruction is too confusing, asking for clarification and explaining why the instruction is confusing.
      - Not giving overly long or rambling GUI components.
   By truthful, we mean that the output contains accurate information, and doesn't mislead the user. Some examples of truthful behaviour:
      - On tasks like summarisation, where the output should only use information from input, not making up details that are not part of the input description.
      - Not producing clearly false information about the production (e.g. making up facts).
   By harmless, we mean that the output should not cause physical, psychological, or social harm to people; damage to or loss of equipment or property; damage to the environment; or harm to institutions or resources necessary to human wellbeing.
   Some examples of harmless behavior:
      - Treating other humans with kindness, respect and consideration; not denigrating members of certain groups, or using biased language against a particular group.
      - Not generating abusive, threatening, or offensive GUI components, with bad language, or promoting violence.
      - Not generating GUI components promoting illegal activity.

A human data engineer may be tasked with generating a corresponding "training" graphical user interface specification 14 for each labelling instruction 13. The "training" graphical user interface specification 14 may have the same format as the specification that is later expected to be output by the pre-trained and fine-tuned LLM; as discussed hereinabove for step S3 of the first exemplary embodiment. However, depending on the level of exhaustiveness of the labelling instruction 13, it may also be possible to use a partly or fully automated process of generating the user interface specification 14 based on the labelling instructions 13.

The LLM 61 may then be automatically fine-tuned in a supervised manner by using each labelling instruction 13 training input data and the corresponding training graphical user interface specification 14 as training output data.

In this way, the LLM 61 may advantageously acquire the specific ability to generate graphical user interface 9 specifications from operator entries 82, and may also acquire additional background knowledge and guidance as to the expectations (such as being harmless, truthful and helpful etc.).

According to a third preferred variant of the fourth exemplary embodiment, the fine-tuning step comprises obtaining graphical user interface specifications of graphical user interfaces 9 that exist in the industrial plant 2. For example, the computing device 7 may crawl or traverse integrated web services provided by various component devices of the industrial plant 2 and/or may crawl or traverse an existing Siemens WinCC Unified system and request and download graphical user interfaces provided by those. These graphical user interfaces will be human-designed graphical user interfaces that have been used with the industrial plant 2. By training the LLM 2 with data obtained from such a crawl or traversal of the existing graphical user interfaces 9 within the industrial plant 2, the LLM 61 may advantageously acquire the capability of providing output in a machine-readable format, i.e. of "speaking" a "language" such as YAML, WinCC RDF, HTML, JSON, or the like, that is used to describe such existing graphical user interfaces 9. Furthermore, the LLM 61 may advantageously gain knowledge about operator expectations of how graphical user interfaces 9 should look like.

Most preferably, the specific ways of fine-tuning of the first, second and third preferred variant of the fourth exemplary embodiments are combined.

Although the present invention has been described in accordance with preferred embodiments, it is obvious for the person skilled in the art that modifications are possible in all embodiments.

It will be appreciated that the configurations of the first and/or second and/or third exemplary embodiment, i.e. periodic re-training the LLM 61 with current data and/or prompting the LLM 61 with relevant current data and/or obtaining relevant current data based on an output of the LLM 61 may be arbitrarily combined as required.

Fig 1. shows an industrial system 1 comprising an industrial plant 2 and an operation system 3 that is communicatively connected to the industrial plant 2. Both the industrial system 1 and the operation system 3 each constitute an example of the claimed system. Furthermore, Fig. 3 shows that the operation system 3 comprises separate devices, such as a user interface device 5, an artificial intelligence device 6 and a computing device 7 comprising units 71-76. However, the distribution of functionality over one or more devices is arbitrary, and the functionality of the various devices 5-7 may also be integrated into fewer or only into a single or into more physical devices. For example, the units 71-76 may also be integrated into the user interface device 5. Similarly, the LLM 61 may also be integrated into the computing device 7 or into the user interface device 6.

In the exemplary embodiments, it has been described that the generative large language module 61 outputs a specification of a graphical user interface 9 that is directly suitable for being rendered on the display 51 of the display device 5. However, it is also conceivable that the specification output by the LLM 61 is postprocessed and converted, using a reversed depth first search traversal algorithm or the like, such as a conversion of structural data containing detailed properties of UI elements into a format such as WinCC Unified RDF files.

Also proposed is a method of operating an industrial plant, the method comprising:
a) obtaining an entry of a topic of interest in natural language from an operator of the industrial plant;
b) generating a prompt for a pre-trained and fine-tuned generative large language model based on the obtained operator entry;
c) inputting the generated prompt to the generative large language model so as to obtain, from the generative large language model, a specification of a graphical user interface related to the entered topic of interest; and
d) rendering the graphical user interface based on the obtained specification.

Also proposed is a method of operating an industrial plant, the method comprising:
a) obtaining an entry of a topic of interest in natural language from an operator of the industrial plant;
b) generating a prompt for a pre-trained and fine-tuned generative large language model based on the obtained operator entry;
c) inputting the generated prompt to the generative large language model so as to obtain, from the generative large language model, a specification of a graphical user interface related to the entered topic of interest;
d) rendering the graphical user interface based on the obtained specification; and
e) operating the industrial plant based on an interaction of the operator with the rendered graphical user interface.

## Claims

1. A method of operating an industrial plant (2), the method comprising:
a) obtaining (S1) an entry (82) of a topic of interest in natural language from an operator of the industrial plant (2);
b) generating (S2) a prompt for a pre-trained and fine-tuned generative large language model (61) based on the obtained entry (82);
c) inputting (S3) the generated prompt to the generative large language model (61) so as to obtain, from the generative large language model (61), a specification of a graphical user interface (9) related to the entered topic of interest;
d) rendering (S4) the graphical user interface (9) based on the obtained specification and based on current data obtained from the industrial plant (2); and
e) operating (S5) the industrial plant (2) based on an interaction of the operator with the rendered graphical user interface (9).

2. The method according to claim 1,
further comprising performing the fine-tuning of the generative large language model (61).

3. The method according to claim 1 or 2,
wherein the generative large language model (61) is and/or is being fine-tuned with static data (12) representing knowledge about the industrial plant (2).

4. The method according to any one of claims 1 to 3,
further comprising obtaining graphical user interface specifications of graphical user interfaces (9) that exist in the industrial plant (2) and fine-tuning the generative large language model (61) with the obtained user interface specifications of the existing graphical user interfaces (9).

5. The method according to any one of claims 1 to 4,
wherein the generative large language model (61) is and/or is being fine-tuned with labelled data comprising labelling instructions (13) and corresponding graphical user interface specifications (13).

6. The method according to any one of claims 1 to 5,
wherein the generative large language model (61) is further fine-tuned, in regular intervals, with dynamic data obtained from the industrial plant (2) and representing a current state of the industrial plant (2).

7. The method according to any one of claims 1 to 6,
wherein step b) comprises obtaining dynamic data from the industrial plant (2) representing a current state of the industrial plant (2) from the industrial plant (2) and including said dynamic data into the prompt.

8. The method according to any one of claims 1 to 7,
wherein step a) comprises authenticating the operator, and step b) comprises including a number of properties of the authenticated operator into the prompt.

9. The method according to any one of claims 1 to 8, further comprising
f) refining the rendered graphical user interface (9) in response to a further entry (92) made by the operator in response to the rendering of the graphical user-interface (9).

10. The method according to any one of claims 1 to 9,
wherein step e) comprises operating the industrial plant (2) based on a further entry (92) made by the operator in response to the rendering of the graphical user-interface (9).

11. A computer program product comprising a program code for executing the method according to any one of claims 1 to 10 when run on at least one computer (7) that is communicatively connected with the industrial plant (2).

12. A device (7) for operating an industrial plant (2), the device (7) comprising:
a) a first unit (71) configured to obtain an entry (82) of a topic of interest in natural language from an operator of the industrial plant (2);
b) a second unit (72) configured to generate a prompt for a pre-trained and fine-tuned generative large language model (61) based on the obtained entry (82);
c) a third unit (73) configured to input the generated prompt to the generative large language model (61) so as to obtain, from the generative large language model (61), a specification of a graphical user interface (9) related to the entered topic of interest;
d) a fourth unit (74) configured to render the graphical user interface (9) based on the obtained specification and based on current data obtained from the industrial plant (2); and
e) a fifth unit (75) configured to operate the industrial plant (2) based on an interaction of the operator with the rendered graphical user interface (9).

13. A system (1) comprising the device (7) of claim 12 and the generative large language model (6, 61).

14. The system of claim 13, further comprising a user interface device (5) on which the graphical user interface (9) is rendered by the fourth unit (74).

15. The system of any one of claims 13 and 14, further comprising the industrial plant (2).
